# EUROPEAN PATENT APPLICATION

(11) **EP 1 796 313 A1**
(43) Date of publication of application: **13.06.2007**
(21) Application number: 05026647.7
(22) Date of filing: 06.12.2005
(51) Int. Cl.: H04L 12/28, H04L 12/24, H04Q 11/00, H04L 12/417, H04L 12/43, H04L 12/44

(54) **A method, communication system and central communication unit for controlling accesses to a shared medium**

(71) Applicant: SIEMENS AKTIENGESELLSCHAFT, 80333 München (DE)
(72) Inventor: Hajduczenia, Marek, 4505-314 Fiaes (PT); Monteiro, Paulo, 3830-209 Ihavo (PT); Silva, Henrique, Prof., 3030-076 Coimbra (PT)

(57) **Abstract**

Under the method for controlling accesses to a shared medium between a central communication unit (OLT) and several peripheral communication units (ONU1...3), there are status information (ONU1...3report) being sent from the peripheral communication units (ONU1...3) to the central communication unit (OLT), whereby the status information (ONU1...3report) are representing each information to be sent from a peripheral communication unit (ONU1...3) over the shared medium and/or requests for accessing the shared medium. The status information (ONU1...3report) being sent from the peripheral communication units during a given time interval (cycleN) are being collected and evaluated centrally. At least one control message (ONU1...3grant) is generated dependent to the result of the evaluation, the at least one control message (ONU1...3grant) representing information for controlling the accesses of the peripheral communication units (ONU1...3) to the shared medium. The control message (ONU1...3grant) is being sent to the peripheral communication units (ONU1...3).

## Description

Access networks connect business and residential subscribers to the central offices of service providers, which in turn are connected to metropolitan area networks (MANs) or wide area networks (WANs). Access networks are commonly referred to as the last mile or first mile, where the latter term emphasizes their importance to subscribers. In today's access networks, telephone companies deploy digital subscriber loop (xDSL) technologies and cable companies deploy cable modems. Typically, these access networks are hybrid fiber coax (HFC) systems with an optical fiber based feeder network between central office and remote node and an electrical distribution network between remote node and subscribers. These access technologies are unable to provide enough bandwidth to current high-speed Gigabit Ethernet local area networks (LANs) and evolving services, e.g., distributed gaming or video on demand. Future first-mile solutions not only have to provide more bandwidth but also have to meet the cost-sensitivity constraints of access networks arising from the small number of cost sharing subscribers.

A passive optical network (PON) is a point-to-multipoint optical access network with no active elements in signal path from source to destination. Here all the transmissions are performed between the OLT (optical line terminal) and ONUs (optical network units). The OLT resides in the central office of network service providers and connect the optical access network to the Metropolitan area network (MAN) or wide area network (WAN). On the other hand the ONU is located at the end user location and provides broadband video, data and voice services. Passive optical networks (PONs) address the last mile of communication infrastructure between the service provider's central office (CO), head end or point of presence (PoP) and business or residential customer locations. Data, voice and video must be offered over the same high-speed connection with guarantees of Quality-of-Service (QoS) and the ability to purchase bandwidth as on need basis.

Ethernet PONs (EPONs) have gained a great amount of interest both in industry and academia as a promising cost-effective solution of next-generation broadband access networks, as illustrated by the formation of several fora and working groups, including the EPON Forum (http://www.ieeecommunities.org/epon), the Ethernet in the First Mile Alliance (http://www.efmalliance.org), and the IEEE 802.3ah working group (http://www.ieee802.org/3/efm). EPONs carry data encapsulated in Ethernet frames, which makes it easy to carry IP packets and eases the interoperability with installed Ethernet LANs. EPONs represent the convergence of low-cost Ethernet equipment (switches, network interface cards (NICs)) and low-cost fiber architectures. Furthermore, given the fact that most of today's data traffic originates from and terminates in Ethernet LANs, EPONs appear to be a natural candidate for future first-mile solutions. The main standardization body behind EPON is the IEEE 802.3ah Task Force. This task force is developing the so-called multipoint control protocol (MPCP) which arbitrates the channel access among central office and subscribers. MPCP is used for dynamically assigning the upstream bandwidth (subscriber-to-service provider), which is the key challenge in the access protocol design for EPONs.

Typically, EPONs (and PONs in general) have a physical tree topology with the central office located at the root and the subscribers connected to the leaf nodes of the tree. At the root of the tree is an optical line terminal (OLT) which is the service provider equipment residing at the central office. The EPON connects the OLT to multiple optical network units (ONU) (the customer premise equipment) through a 1 : N optical splitter/combiner. An ONU can serve a single residential or business subscriber, referred to as Fiber-to-the-Home/Business (FTTH/B), or multiple subscribers, referred to as Fiber-to-the-curb (FTTC). Each ONU buffers data received from the attached subscriber(s). In general, the round-trip time (RTT) between OLT and each ONU is different. Due to the directional properties of the optical splitter/combiner the OLT is able to broadcast data to all ONUs in the downstream direction. In the upstream direction, however, ONUs cannot communicate directly with one another. Instead, each ONU is able to send data only to the OLT. Thus, in the downstream direction an EPON may be viewed as a point-to-multipoint network and in the upstream direction, an EPON may be viewed as a multipoint-to-point network. Due to this fact, the original Ethernet media access control (MAC) protocol does not operate properly since it relies on a broadcast medium.

In the upstream direction, all ONUs share the transmission medium - also called shared medium. To avoid collisions, several approaches can be used. Wavelength division multiplexing (WDM) is currently considered cost prohibitive since the OLT would require a tunable receiver or a receiver array to receive data on multiple wavelength channels and each ONU would need to be equipped with a wavelength-specific transceiver. At present, time division multiplexing (TDM) is considered a more cost-effective solution. With TDM a single transceiver is required at the OLT and there is just one type of ONU equipment.

The MPCP arbitration mechanism developed by the IEEE 802.3ah Task Force is used to dynamically assign non-overlapping upstream transmission windows (time slots) to each ONU. Beside auto-discovery, registration, and ranging (RTT computation) operations for newly added ONUs, MPCP provides the signalling infrastructure (control plane) for coordinating the data transmissions from the ONUs to the OLT.

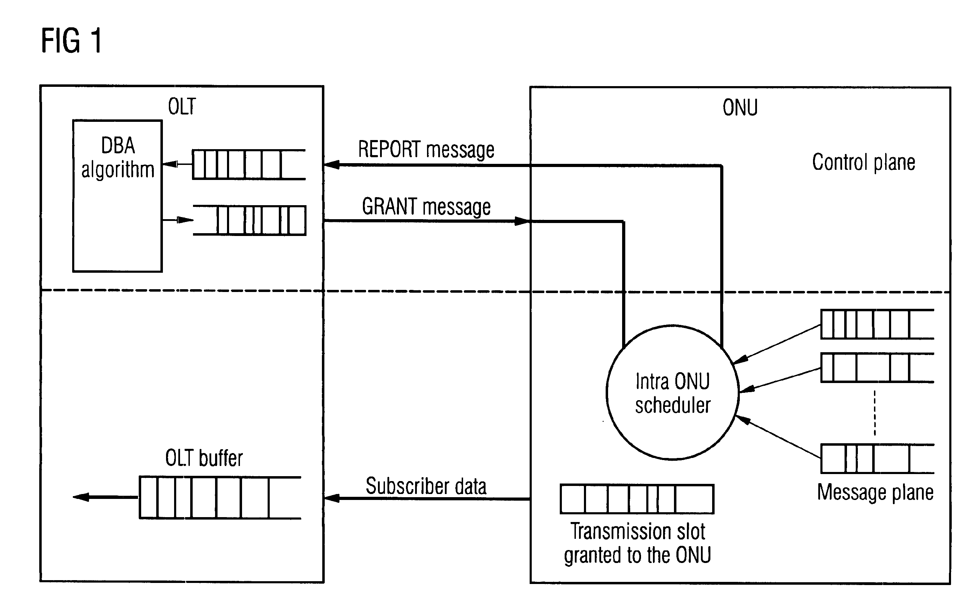

The basic idea is that the upstream bandwidth is divided into bandwidth units via TDM. These units are assigned to the ONUs as is determined by the OLT according to the DBA algorithm in use. The OLT has control over the assignment of these units of bandwidth. These units can be assigned on the fly as needed or can be reserved in advance. For efficiency reasons, any reserved units or fraction of units of bandwidth that go unused can in general be re-assigned on the fly by the OLT to other ONUs that could make use of it. As shown in FIG 1, MPCP uses two types of messages to facilitate arbitration: REPORT and GATE. Each ONU has a set of queues, possibly prioritized, holding Ethernet frames ready for upstream transmission to the OLT. The REPORT message is used by an ONU to report bandwidth requirements (typically in the form of queue occupancies) to the OLT. A REPORT message can support the reporting of up to thirteen queue occupancies of the corresponding ONU. Upon receiving a REPORT message, the OLT passes it to the DBA algorithm module. The DBA module calculates the upstream transmission schedule of all ONUs such that channel collisions are avoided. Note that MPCP does not specify any particular DBA algorithm. MPCP simply provides a framework for the implementation of various DBA algorithms. After executing the DBA algorithm, the OLT transmits GATE messages to issue transmission grants. Each GATE message can support up to four transmission grants. Each transmission grant contains the transmission start time and transmission length of the corresponding ONU. Each ONU updates its local clock using the timestamp contained in each received transmission grant. Thus, each ONU is able to acquire and maintain global synchronization. The transmission start time is expressed as an absolute timestamp according to this global synchronization. Each ONU sends backlogged Ethernet frames during its granted transmission window using its local intra-ONU scheduler. The intra-ONU scheduler schedules the packet transmission from the various local queues. The transmission window may comprise multiple Ethernet frames; packet fragmentation is not allowed. As a consequence, if the next frame does not fit into the current transmission window it has to be deferred to the next granted transmission window.

In actual EPONs several technical problems do appear. One of these problems is ineffective bandwidth management based on insufficient information about the current state of buffers in all connected ONUs. Since the currently existing DBA algorithm schedules upstream transmission slots based on the information from only a single ONU (immediately upon receipt of its corresponding bandwidth request - REPORT MPCP DU), and current buffer state of the remaining active ONUs is unknown (or uncertain, since various forms of traffic prediction might be utilized here), the size of the actually granted transmission slot is either very restrictive or leads to underutilization of the available transmission bandwidth. Bandwidth underutilization is defined here as a condition in which the OLT schedules slot sizes in a restrictive manner (limited service policy), where the maximum acceptable slot size is defined statically and does not change along with the change in the network load conditions. Moreover, it does not reflect the variations in the load of particular ONUs, and thus some ONUs might have data streams below the maximum value, leaving more bandwidth to heavily loaded units without breaching the predefined QoS and average packet delay conditions. However, standard service policies implemented by the IPACT type protocols do not allow for any variations in the maximum slot sizes, since the current state of other ONUs is unknown at the scheduling time, thus the restrictiveness of slot scheduling. Once detailed QoS and average packet delay boundaries are defined for the system, such static restrictions might and will lead to heavily loaded ONUs suffering from bandwidth shortage, while additional bandwidth might be available within the system though cannot be scheduled properly.

The present invention is therefore directed to mitigate the above mentioned technical problems and especially to improve bandwidth management in EPONs. The object of the invention is achieved in the features of claim 1, 7 and 8.

Under the inventive method for controlling accesses to a shared medium between a central communication unit and several peripheral communication units there is status information being sent from the peripheral communication units to the central communication unit. The status information are representing each
- information to be sent from a peripheral communication unit over the shared medium and/or
- requests for accessing the shared medium.
   The status information being sent from the peripheral communication units during a given time interval are being collected and evaluated centrally. Dependent to the result of the evaluation at least one control message is being generated, the at least one control message representing information for controlling the accesses of the peripheral communication units to the shared medium. The control message is being sent to the peripheral communication units.

One of the advantages of the invention is the improved centralised control over individual data streams originating from all connected and active ONUs, with extension into the priority class domain, where the OLT maintains control over the overall data stream generated by a particular ONU and monitors the contents of priority traffic. This particular feature allows for adjusting the adopted service policy to the current network conditions (Dynamic Service Policy, service policy extensions, etc). Such improved information scheduling capabilities originate from the fact that information about the current network status is gathered over the given polling cycle and then used to estimate the most optimum polling scenario, considering current upstream channel load, individual bandwidth requests, priority structure of the traffic, QoS, and legally binding SLAs. Therefore, any static allocation limitations imposed by standard polling protocols have been eliminated, with the average packet delay maintaining maximum values for delay sensitive traffic classes.

Further advantageous embodiments of the method including a system and a central communication unit for controlling accesses according to the invention will emerge from the further claims.

The method according to the invention is explained in more detail below with references to several drawings, in which
- FIG 1: shows a MPCP operation, especially a two-way messaging assignment of time slots for upstream transmission between ONU and OLT
- FIG 2: shows an example of the access algorithm operation according to the invention
- FIG 3: shows an operation algorithm for GRANT message transmission in downstream direction.

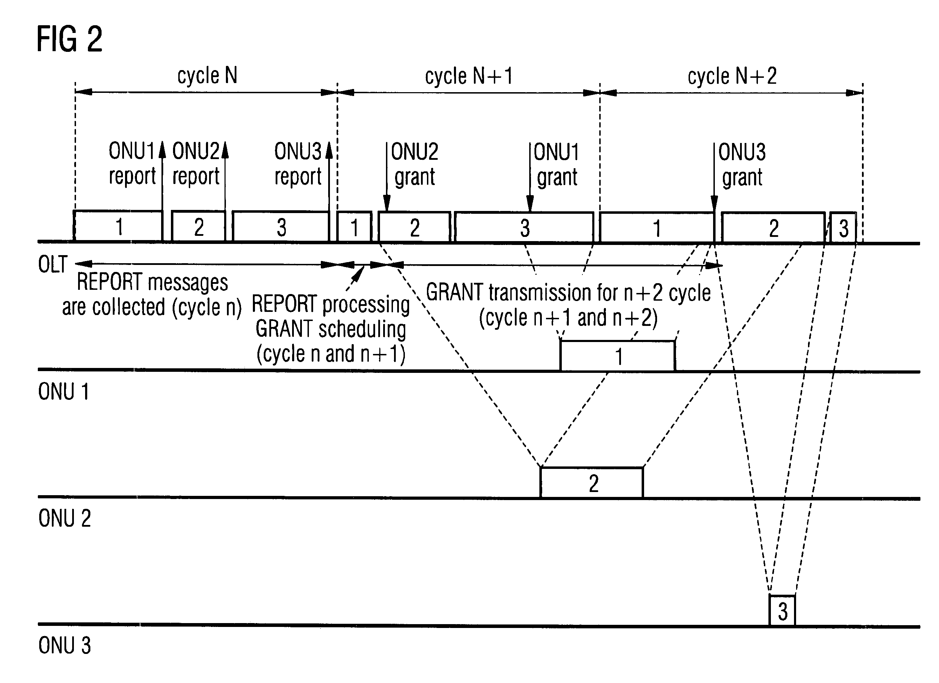

FIG 2 shows in a timeline an example of the access algorithm operation according to the invention in a network with 3 active ONU modules ONU1...3.

The access algorithm resp. access protocol according to the invention utilizes a modified interleaved GRANT/REPORT messaging system, where GRANT messages are delayed one ore more polling cycle in relation to the respective REPORT messages ONU1...3report. The protocol in question utilizes the extended MPCP GRANT/MESSAGE messaging system to exchange information about the current buffer state (REPORT messages transmitted upstream from the ONU to OLT) as well as granted transmission slots (GRANT messages transmitted downstream to the given ONU) between slave devices (subscriber network units - ONUs) and the central master device (OLT located at the Central Office of the service provider). The utilized control message format is consistent with the IEEE 802.3ah.

During the polling cycle number n (cycleN), the central OLT controller collects REPORT messages ONU1...3report transmitted upstream by all active ONUs ONI1...3 and decodes them upon receipt. Providing that at some moment of time an ONU depletes its buffers and reports zero sized priority queues, the OLT shall grant such an ONU a transmission slot of size zero, thus allowing such a network unit to send upstream an updated REPORT message during the next polling cycle. Such a mechanism prevents excessive increase in the average packet delay for light loaded ONUs and assures stable operation of the polling algorithm even under light and very light network load conditions, without dropping ONUs out of the service cycle. Such data collection process is continued throughout the length of the polling cycle n, and once it ends, the OLT scheduler has a collection of REPORT messages from all active ONUs ONI1...3 connected to the given network structure. Such messages are already decoded and stored in a FIFO type queue, waiting for further processing.

Once the polling cycle n ends (which is when the OLT receives the last REPORT message from the pool of all active ONUs ONI1...3), all decoded REPORT messages are used to feed the central OLT grant scheduler. Therefore at the end of polling cycle n cycleN the OLT has an overview of all necessary bandwidth each ONU needs and all bandwidth demands can be considered during evaluation and calculation of grants. Such a grant size scheduler is responsible for calculating the size of the upstream transmission slots granted to the given ONUs ONU1...3. Grant size calculation is globally known and can be performed based on the following criteria:
➢ The size of the upstream transmission slot requested by the given ONU (disregarding at this point information about the size of particular queues);
➢ The total amount of available upstream transmission bandwidth in respect to the maximum length of the network polling cycle;
➢ The total number of active ONUs within the given network structure;
➢ The type of the service policy imposed by the network operator (fixed, gated, limited, credit - constant, random, linear, histogram, elastic, DSP, e-gated, e-limited).

Having estimated the size of the granted upstream transmission slots assigned to the active ONUs, the central OLT scheduler performs queue scheduling based on the following information:
➢ The number of priority queues supported by the given network system (ranging from 1 to 8 in accordance with the traffic class mapping regulations defined in Annex G of the IEEE 802.1q standard);
➢ The requested upstream transmission slots relative to the particular priority queues (the current reported size of the given priority queues);
➢ The previously granted total upstream transmission slot assigned to a given ONU by the central OLT grant scheduler.

The last operation that the central OLT scheduler must perform is calculation and alignment of the GRANT message transmission times. The GRANT message transmission time is calculated immediately when the given ONU is granted a transmission slot (after the grant size and queue size schedulers have finished their operation). The GRANT message transmission time is calculated based on the following information:
➢ The aggregated slot sizes for all the previously granted ONUs;
➢ The RTT characteristic for the particular ONU, dependent of the physical distance between the OLT and the given ONU;
➢ The starting moment of time for the given polling cycle.

Once the GRANT messages are properly scheduled and assigned to particular ONUs, the CPT (Cycle Polling Table) needs to be checked against possible overlapping of two or more GRANT messages in the time domain.

Due to different RTT times for all active and connected ONUs, as well as a variable size of the granted transmission slot, in a general case the calculated transmission times might overlap, meaning that two or more GRANT messages might be scheduled for transmission in the downstream direction for overlapping (completely or partially) time slots. In this way such GRANT messages, once transmitted in the downstream direction, would result in their complete or partial invalidity, causing a faulty polling cycle. In order to prevent such a situation from occurring under typical network operation, the central OLT grant scheduler must perform GRANT message checking to make sure that they do not overlap.

GRANT message overlapping is verified without the CPT queue undergoing any additional form of ordering, since there is no such need - this saves a great deal of computational time which would be required in case of need for additional queue ordering in time.

Once verified, the CPT array may be safely inserted into the MPT array, storing all valid GRANT transmission events in a FIFO type queue and allowing also for unlimited access (removal/insertion) to queue elements at any position of the array.

Once the GRANT message injection process is complete, the MPT queue contains a current set of GRANT messages valid for polling cycles n+1 and n+2 or any further cycles (not shown in FIG 2).

During polling cycles n+1 and n+2, the central controller located within the OLT utilizes the stored GRANT messages, extracted from the FIFO MPT queue (always from the head of the queue) at the appropriate moment of time. Detailed description of the GRANT message issuing process is described as follows.

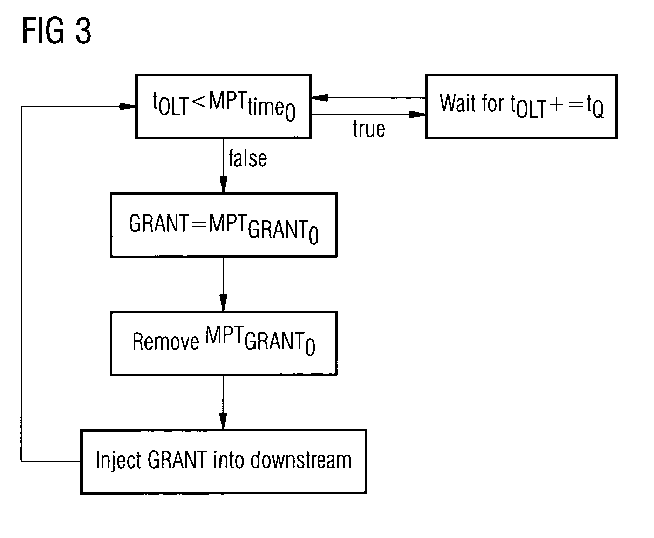

The operation algorithm is depicted in FIG 3 and assumes that the MPT queue already contains some GRANT messages scheduled for transmission in the downstream direction.

The current local OLT time is compared with the GRANT message time stamp for the MPT's head element (index 0). Providing that the local OLT time is smaller than the next message's time stamp, the procedure waits for the local OLT time to be increased by 1 TQ (Time Quantum of 16 ns, for 1 Gbit/s effective channel rate characteristic for EPONs) and then compares the times again. This process is repeated until the logical condition evaluates to false and the given GRANT message can be transmitted in the downstream direction. The given head GRANT message is then extracted from the MPT queue and injected into the downstream data stream with the highest transmission priority (0, in accordance with the standards IEEE 802.1q, Annex G, and IEEE 802.3ah, clause 64.2.1), allowing for its instant delivery ahead of any normal data frames awaiting downstream transmission in the OLT buffer space. In this way, the system makes sure that the control packets are delivered instantly, which is the basis for timely upstream transmission and whole system's operational stability. It is worth nothing that, once a GRANT message is extracted from the MPT queue, the system interrupts any ongoing downstream transmission (without packet fragmentation, and thus a packet under transmission at a given moment of time will be allowed to complete its transmission) and awaits the GRANT message to be injected into the appropriate data stream.

The very same process is repeated continuously until the GRANT messages are depleted, which is equivalent to the system's operation halt. The nature of the polling protocol itself does not allow for a situation in which the MPT becomes empty, and thus such an event indicates either network hardware failure or instant disconnection of all previously active ONUs. In either case, the OLT shall stop granting transmission slots until normal operation conditions are restored.

The whole above described polling cycle is repeated continuously to allow for stable operation of the whole network deployment.

The method according to the invention can be used in very communication network with shared medium topology like spanning tree, rings, busses etc which are operating well with MPCP.

## Claims

1. A method for controlling accesses to a shared medium between a central communication unit (OLT) and several peripheral communication units (ONU1...3),
with status information (ONU1...3report) being sent from the peripheral communication units (ONU1...3) to the central communication unit (OLT),
the status information (ONU1...3report) are representing each
- information to be sent from a peripheral communication unit (ONU1...3) over the shared medium and/or
- requests for accessing the shared medium
comprising,
- collecting status information (ONU1...3report) being sent from the peripheral communication units during a given time interval (cycleN),
- evaluating the collected status information (ONU1...3report) centrally,
- generating at least one control message (ONU1...3grant) dependent to the result of the evaluation,
- the at least one control message (ONU1...3grant) representing information for controlling the accesses of the peripheral communication units (ONU1...3) to the shared medium
- sending the control messages (ONU1...3grant) to the peripheral communication units (ONU1...3).

2. A method according to claim 1,
**characterised in**
**that** the time interval (cycleN) is a recurrent time interval.

3. A method according to claim 1 or 2,
**characterised in**
sending the control messages (ONU1...3grant) during the at least next following time interval (cycleN+1, cycleN+2).

4. A method according to one of the preceding claims,
**characterised in that**
the shared medium is arranged as a passive optical network.

5. A method according to claim 4,
**characterised in that**
the passive optical network is arranged according to the Standard IEEE 802.3 ah.

6. A method according to one of the preceding claims,
**characterised in that**
that the transmission of the status-information (ONU1...3report) and the transmission of the control message ((ONU1...3grant) is realized within the scope of the Multipoint Control Protocol, MPCP.

7. A communication system for controlling accesses to a shared medium between a central communication unit (OLT) and several peripheral communication units (ONU1...3),
with means for sending status information (ONU1...3report) from the peripheral communication units (ONU1...3) to the central communication unit (OLT),
wherein the status information (ONU1...3report) are representing each
- information to be sent from a peripheral communication unit (ONU1...3) over the shared medium and/or
- requests for accessing the shared medium
**characterized in that** ,
means are assigned to the central communication unit (OLT) for
- collecting status information (ONU1...3report) being sent from the peripheral communication units during a given time interval (cycleN), and
- evaluating the collected status information (ONU1...3report) centrally,
- generating at least one control message (ONU1...3grant) dependent to the result of the evaluation, the control message (ONU1...3grant) representing information for controlling the accesses of the peripheral communication units to the shared medium, and
- sending the control messages (ONU1...3grant) to the peripheral communication units.

8. Central communication unit for a communication system according to claim 7,
with means for
- collecting status information (ONU1...3report) being sent from the peripheral communication units (ONU1...3) during a given time interval (cycleN), and
- evaluating the collected status information (ONU1...3report),
- generating at least one control message (ONU1...3grant) dependent to the result of the evaluation, the control message (ONU1...3grant) representing information for controlling the accesses of the peripheral communication units to the shared medium, and
- sending the control messages (ONU1...3grant) to the peripheral communication units.
